# EUROPÄISCHE PATENTANMELDUNG

(11) **EP 2 597 387 A1**
(43) Veröffentlichungstag der Anmeldung: **29.05.2013**
(21) Anmeldenummer: 12191189.5
(22) Anmeldetag: 05.11.2012
(51) Int. Cl.: F24F 5/00, E06B 7/10, E06B 7/12, F24F 7/00

(54) **Luftströmungsanordnung mit Heizelement im Luftströmungskanal**

(30) Priorität: 18.11.2011 DE 102011055496
(71) Anmelder: Kockler, Achim, 01445 Radebeul (DE); Kockler, Hans-Joachim, 02694 Malschwitz (DE)
(72) Erfinder: Kockler, Achim, 01445 Radebeul (DE); Kockler, Hans-Joachim, 02694 Malschwitz (DE)
(74) Vertreter: Kinnstätter, Klaus

(57) **Zusammenfassung**

Eine Luftströmungsanordnung weist einen Luftströmungskanal (3) auf, der in der Außenfassade (2) eines Gebäudes (1) angeordnet ist. Der Luftströmungskanal (3) verbindet einen Raum des Gebäudes (1) strömungstechnisch mit der Umgebung des Gebäudes (1). Dadurch kann über den Luftströmungskanal (3) Luft aus dem Raum in die Umgebung und umgekehrt Luft aus der Umgebung in den Raum strömen. Der Luftströmungskanal (3) ist als passiver Luftströmungskanal (3) ausgebildet, so dass sich die Richtung der Luftströmung aufgrund der Luftdruckunterschiede zwischen dem Raum und der Umgebung einstellt. Im Luftströmungskanal (3) ist ein Heizelement (17) angeordnet. Mittels des Heizelements (17) wird der den Luftströmungskanal (3) durchströmenden Luft nicht nur dann, wenn die Luft aus der Umgebung in den Raum strömt, sondern auch dann, wenn die Luft aus dem Raum in die Umgebung strömt, Wärme zugeführt.

## Beschreibung

Die vorliegende Erfindung betrifft eine Luftströmungsanordnung,
- wobei die Luftströmungsanordnung einen Luftströmungskanal aufweist, der in der Außenfassade eines Gebäudes angeordnet ist und einen Raum des Gebäudes strömungstechnisch mit der Umgebung des Gebäudes verbindet, so dass über den Luftströmungskanal Luft aus dem Raum in die Umgebung und umgekehrt Luft aus der Umgebung in den Raum strömen kann,
- wobei der Luftströmungskanal als passiver Luftströmungskanal ausgebildet ist, so dass sich die Richtung der Luftströmung aufgrund der Luftdruckunterschiede zwischen dem Raum und der Umgebung einstellt.

Derartige Luftströmungsanordnungen sind allgemein bekannt. Rein beispielhaft wird auf die DE 199 29 133 C2 und das Faltblatt REGEL-air der Innoperform GmbH, 02694 Malschwitz, verwiesen. Mittels derartiger Luftströmungsanordnungen wird erreicht, dass unabhängig von den Lüftungsgewohnheiten des Raumbenutzers stets ein hinreichender Luftaustausch zwischen dem Raum und der Umgebung gewährleistet ist. Insbesondere können dadurch übermäßige Feuchtigkeit und daraus resultierende Schäden im Raum vermieden werden.

Warme Luft kann bekanntlich erheblich größere Mengen an Wasser aufnehmen als kalte Luft. In dem Fall, dass die im Luftströmungskanal strömende Luft aus dem Raum in die Umgebung strömt, kann es daher - insbesondere im Winter - zu Kondensationserscheinungen im Luftströmungskanal kommen. In dem umgekehrten Fall, dass die im Luftströmungskanal strömende Luft aus der Umgebung in den Raum strömt, wird dieser Luftzug, wenn die Luft zu kalt ist, vom Raumbewohner als deutlich unangenehm empfunden.

Im Stand der Technik werden diese Erscheinungen oftmals schlichtweg hingenommen. Zur Reduzierung dieser Erscheinung ist im Stand der Technik jedoch auch eine sogenannte Wärmerückgewinnung bekannt. Bei der Wärmerückgewinnung ist ein Wärmetauscher vorhanden, dem einerseits Luft aus dem Außenbereich des Gebäudes zugeführt wird und der diese Luft an das Rauminnere weiterleitet. Andererseits wird - simultan zu dieser Luftströmung - Luft aus dem Gebäude entnommen und über den Wärmetauscher in den Außenbereich des Gebäudes geführt. Der jeweils wärmere Luftstrom gibt im Wärmetauscher seine Wärme (teilweise) an den jeweils kälteren Luftstrom ab.

Die Aufgabe der vorliegenden Erfindung besteht darin, eine Luftströmungsanordnung derart weiterzuentwickeln, dass die oben genannten unerwünschten Effekte nicht mehr auftreten.

Die Aufgabe wird durch eine Luftströmungsanordnung mit den Merkmalen des Anspruchs 1 gelöst. Vorteilhafte Ausgestaltungen der erfindungsgemäßen Luftströmungsanordnung sind Gegenstand der abhängigen Ansprüche 2 bis 13.

Erfindungsgemäß ist vorgesehen, eine Luftströmungsanordnung der eingangs genannten Art dadurch auszugestalten,
- dass im Luftströmungskanal ein Heizelement angeordnet ist und
- dass der den Luftströmungskanal durchströmenden Luft mittels des Heizelements nicht nur dann, wenn die Luft aus der Umgebung in den Raum strömt, sondern auch dann, wenn die Luft aus dem Raum in die Umgebung strömt, Wärme zugeführt wird.

Durch die erfindungsgemäße Ausgestaltung der Luftströmungsanordnung können - je nach Strömungsrichtung der Luft - sowohl Kondensationseffekte als auch Zuglufterscheinungen vermieden bzw. zumindest gemildert werden. Der im Luftströmungskanal strömenden Luft kann mittels des Heizelements also unabhängig von ihrer Strömungsrichtung Wärme zugeführt werden.

Der Luftströmungskanal kann als Außenluftdurchlass ausgebildet sein. Der Begriff "Außenluftdurchlass" hat für den Fachmann eine feststehende Bedeutung. Es handelt sich bei einem Außenluftdurchlass um eine Lüftungskomponente, die das planmäßige Durchströmen von Luft durch die Außenhülle eines Gebäudes ermöglicht.

Der Außenluftdurchlass kann im Mauerwerk der Außenfassade angeordnet sein. Weiterhin kann der Luftströmungskanal - unabhängig davon, ob er als Außenluftdurchlass ausgebildet ist oder nicht - Bestandteil eines Fensters des Gebäudes sein. Der Luftströmungskanal kann in diesem Fall beispielsweise im Blendrahmen des Fensters, im Flügelrahmen des Fensters oder in dem bei geschlossenem Fenster zwischen Blendrahmen und Flügelrahmen ausgebildeten Fensterfalz angeordnet sein. Ebenso kann er in einem Verbreiterungsprofil am Blendrahmen, im Glas selbst, im Glasfalz oder in der Bauanschlussfuge des Fensters mit Mauerwerk der Außenfassade angeordnet sein.

Das Heizelement ist vorzugsweise als luftströmungsunabhängig erwärmtes Heizelement ausgebildet. Insbesondere kann es als elektrisches oder als thermisches Heizelement ausgebildet sein.

Vorzugsweise weist die Luftströmungsanordnung eine entsprechende - elektrische oder thermische - Energiequelle auf, über die das Heizelement mit der entsprechenden Energie versorgt wird.

Insbesondere in dem Fall, dass der Luftströmungskanal Bestandteil des Fensters ist, ist das Heizelement in aller Regel mit dem Blendrahmen oder dem Flügelrahmen (mechanisch fest) verbunden. Die Energiequelle ist in diesem Fall mit demselben Rahmen (mechanisch fest) verbunden. Wenn also das Heizelement mit dem Blendrahmen verbunden ist, ist vorzugsweise auch die Energiequelle mit dem Blendrahmen verbunden. Ebenso ist in dem Fall, dass das Heizelement mit dem Flügelrahmen verbunden ist, die Energiequelle vorzugsweise mit dem Flügelrahmen verbunden.

Die Energiequelle kann im Fall einer elektrischen Energiequelle beispielsweise als Fotodiodenanordnung ausgebildet sein. Im Falle einer thermischen Energiequelle kann die Energiequelle beispielsweise als Solarmodul ausgebildet sein.

Vorzugsweise ist zwischen der Energiequelle und dem Heizelement eine Speicheranordnung angeordnet. Dadurch kann in Zeiten, in denen die Energiequelle keine Energie liefert, ein Weiterbetrieb des Heizelements zumindest für eine gewisse Zeit gewährleistet sein. Die Speicheranordnung kann beispielsweise als elektrischer oder thermischer Akkumulator oder dergleichen ausgebildet sein.

Es ist möglich, das Heizelement als ungesteuertes Heizelement zu betreiben. Alternativ ist es möglich, das Heizelement gesteuert zu betreiben. In diesem Fall kann beispielsweise von einer Steuereinrichtung in Abhängigkeit von der Temperatur und/oder der relativen Feuchtigkeit der den Luftströmungskanal durchströmenden Luft und/oder dem Ladezustand eines Energiespeichers und gegebenenfalls auch in Abhängigkeit von der Strömung der Luft (Richtung und/oder Geschwindigkeit bzw. Volumen pro Zeiteinheit) eine Wärmeleistung eingestellt werden, die von dem Heizelement an die Luft abgegeben werden soll. In einer besonders bevorzugten Ausgestaltung der vorliegenden Erfindung ist das Heizelement jedoch als selbstregulierendes Heizelement ausgebildet. Derartige Heizelemente sind beispielsweise für elektrisch betriebene Heizelemente in Form so genannter selbstregulierender Heizbänder bekannt.

Vorzugsweise ist im Luftströmungskanal ein den Volumenstrom begrenzendes Lüftungselement angeordnet. Derartige, von der Luftströmung angetriebene und den Volumenstrom dadurch aktiv begrenzende Lüftungselemente sind beispielsweise aus dem eingangs genannten Stand der Technik bekannt.

Weitere Vorteile und Einzelheiten ergeben sich aus der nachfolgenden Beschreibung von Ausführungsbeispielen in Verbindung mit den Zeichnungen. Es zeigen in schematischer Prinzipdarstellung
- FIG 1: ein Gebäude mit Luftströmungskanälen,
- FIG 2: einen Teil der Außenfassade des Gebäudes mit einem Fenster und
- FIG 3 und 4: je einen Schnitt entlang einer Linie III-III bzw. IV-IV durch das Fenster von FIG 2.

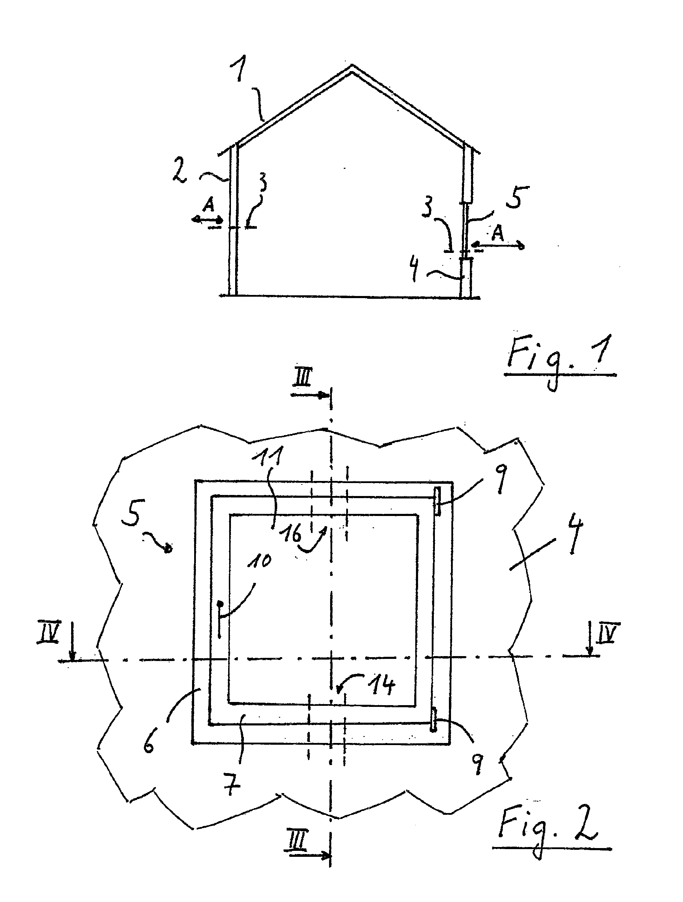

Gemäß FIG 1 weist ein Gebäude 1 eine Außenhülle 2 (= Außenfassade 2) auf. Die Außenfassade 2 ist im Wesentlichen geschlossen. Dennoch soll ein Luftaustausch zwischen dem Inneren des Gebäudes 1 - insbesondere einem Raum des Gebäudes 1 - und der Umgebung erfolgen können. Zu diesem Zweck sind in FIG 1 schematisch angedeutete Luftströmungskanäle 3 vorhanden. Die Luftströmungskanäle 3 sind gemäß FIG 1 in der Außenfassade 2 des Gebäudes 1 angeordnet. Sie können - siehe in FIG 1 den linken Luftströmungskanal 3 - im Mauerwerk 4 des Gebäudes 1 angeordnet sein. In diesem Fall sind die Luftströmungskanäle 3 als (passive) Außenluftdurchlässe ausgebildet. Alternativ können die Luftströmungskanäle 3 - siehe in FIG 1 den rechten Luftströmungskanal 3 - Bestandteil eines Fensters 5 des Gebäudes 1 sein. Auch in diesem Fall können die Luftströmungskanäle 3 als (passive) Außenluftdurchlässe ausgebildet sein. Dies ist jedoch nicht zwingend erforderlich. Unabhängig von ihrer konkreten Anordnung und Ausgestaltung verbinden die Luftströmungskanäle 3 den von dem Gebäude 1 umschlossenen Raum strömungstechnisch mit der Umgebung des Gebäudes 1. Es ist daher möglich, dass Luft über den jeweiligen Luftströmungskanal 3 aus dem Raum des Gebäudes 1 in die Umgebung strömt. Ebenso ist es möglich, dass Luft aus der Umgebung des Gebäudes 1 in den Raum strömt. Dies ist in FIG 1 durch entsprechende Doppelpfeile A angedeutet.

In der Regel stellt sich die Richtung der Luftströmung aufgrund äußerer Umstände ein, beispielsweise aufgrund der Luftdruckunterschiede zwischen dem Raum und der Umgebung. In diesem Fall wird der entsprechende Luftströmungskanal 3 bidirektional betrieben, wobei zu einem bestimmten Zeitpunkt selbstverständlich nur ein unidirektionaler, durch die äußeren Umstände bestimmter Betrieb erfolgt. Alternativ ist es möglich, dass - ähnlich einem elektrischen Gleichrichter oder einem federbelasteten Kugelventil - durch Luftleitelemente (beispielsweise Luftklappen) eine Luftströmung nur in einer einzigen der beiden prinzipiell möglichen Strömungsrichtungen zugelassen wird.

Wie bereits erwähnt, kann der Luftströmungskanal 3 Bestandteil eines Fensters 5 sein. Diese Ausgestaltung stellt voraussichtlich den häufigsten Fall dar. Die vorliegende Erfindung wird daher nachfolgend - rein beispielhaft - in Verbindung mit einem Fenster 5 mit zwei Anschlagdichtungen näher erläutert. Die entsprechenden Ausführungen sind jedoch nicht auf die Anordnung in einem Fenster 5 und auch nicht auf die gezeigte Ausgestaltung des Fensters 5 beschränkt.

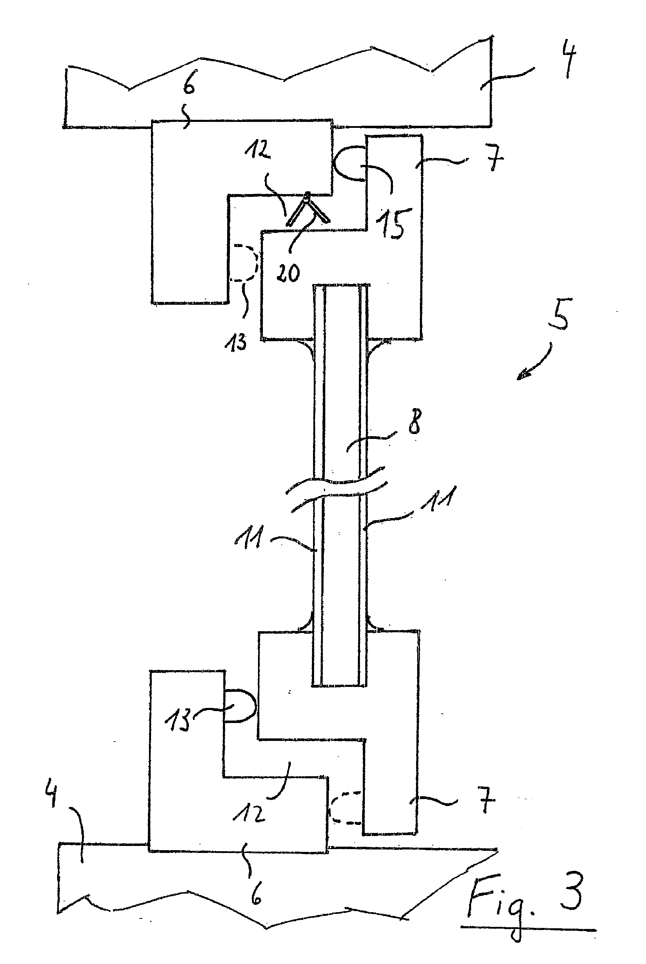

Gemäß den FIG 2 und 3 ist das Fenster 5 im Mauerwerk 4 des Gebäudes 1 angeordnet. Das Fenster 5 weist einen Blendrahmen 6, einen Flügelrahmen 7 und eine Scheibenanordnung 8 auf. Der Blendrahmen 6 ist im Mauerwerk 4 befestigt, beispielsweise über mit dem Mauerwerk 4 verschraubte Ankerlaschen (nicht dargestellt). Er kann von einem Verbreiterungsprofil 6' umgeben sein. Der Flügelrahmen 7 ist mit dem Blendrahmen 6 verbunden. Die Verbindung kann fest sein. In der Regel sind jedoch Scharnierbänder 9 und (mindestens) eine Griffolive 10 vorhanden, so dass das Fenster 5 geöffnet werden kann. Der Flügelrahmen 7 trägt die Scheibenanordnung 8. Die Scheibenanordnung 8 weist - entsprechend dem üblichen Stand der Technik - in der Regel mehrere miteinander verbundene Scheiben 11 auf, meist zwei oder drei. Der Blendrahmen 6 und der Flügelrahmen 7 bilden bei geschlossenem Fenster 5 zwischen sich einen Fensterfalz 12 aus.

Im Blendrahmen 6 ist eine Außendichtung 13 angeordnet. Die Außendichtung 13 ist in einem relativ kleinen Bereich 14 unterbrochen. Dies ist in FIG 3 dadurch angedeutet, dass in FIG 3 die Außendichtung 13 im Bereich 14 nur gestrichelt dargestellt ist. Der Bereich 14 ist gemäß FIG 2 an der Unterseite des Fensters 5 angeordnet. Dies ist jedoch von untergeordneter Bedeutung. Aufgrund der Unterbrechung der Außendichtung 13 im Bereich 14 besteht eine strömungstechnische Verbindung des Fensterfalzes 12 mit der Umgebung des Gebäudes. Im übrigen Bereich liegt die Außendichtung 13 bei geschlossenem Fenster 5 am Flügelrahmen 7 an.

In analoger Weise ist im Flügelrahmen 7 eine Innendichtung 15 angeordnet. Die Innendichtung 15 ist in einem relativ kleinen Bereich 16 unterbrochen. Dies ist in FIG 3 dadurch angedeutet, dass in FIG 3 die Innendichtung 15 im Bereich 16 nur gestrichelt dargestellt ist. Der Bereich 16 befindet sich in der Regel an einer anderen Stelle als der Bereich 14, beispielsweise an der Oberseite des Fensters 5. In diesem Bereich 16 besteht eine strömungstechnische Verbindung des Fensterfalzes 12 mit dem Inneren des Gebäudes 1, also einem Raum des Gebäudes 1. Im übrigen Bereich liegt die Innendichtung 15 bei geschlossenem Fenster 5 am Blendrahmen 6 an.

Aufgrund der Unterbrechungen der Außendichtung 13 und der Innendichtung 15 in den Bereichen 14 und 16 - also der Ausbildung der Außendichtung 13 und der Innendichtung 14 in den Bereichen 14, 16 als Scheindichtung - kann Luft aus der Umgebung des Gebäudes 1 im Bereich 14 in den Fensterfalz 12 einströmen, sodann entlang des Fensterfalzes 12 weiterströmen und im Bereich 16 aus dem Fensterfalz 12 heraus in den Raum strömen. Auch die umgekehrte Luftbewegung ist möglich.

Gemäß den obenstehenden Ausführungen zu den FIG 2 und 3 ist der Luftströmungskanal im Fensterfalz 12 angeordnet. Der Luftströmungskanal 3 könnte jedoch alternativ im Blendrahmen 6 oder im Flügelrahmen 7 oder auch an anderer Stelle angeordnet sein, beispielsweise im Verbreiterungsprofil 6' oder im Glasfalz.

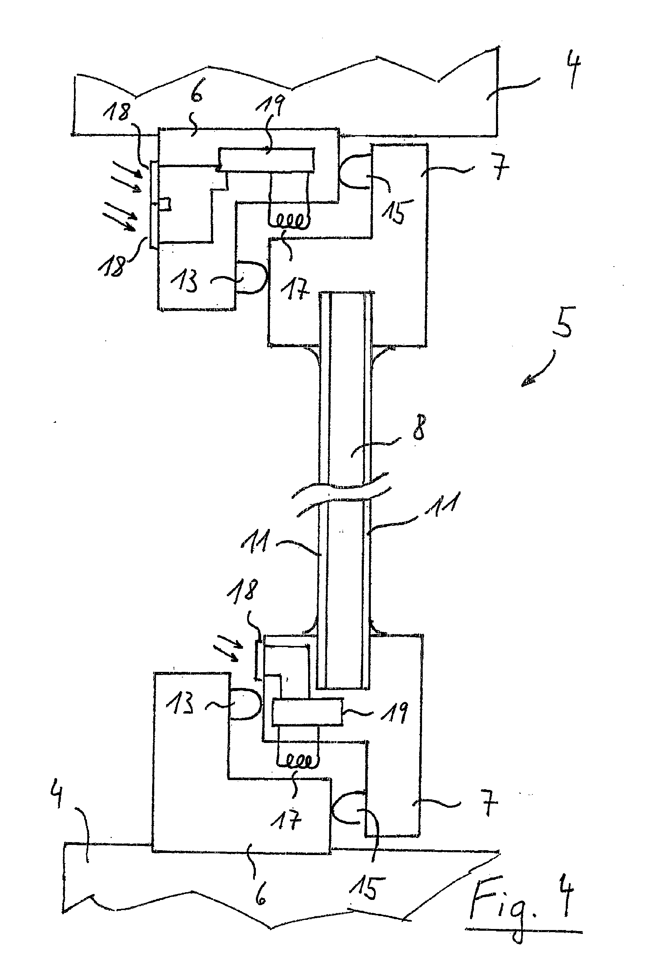

Gemäß FIG 4 ist im Luftströmungskanal 3 ein Heizelement 17 angeordnet. Mittels des Heizelements 17 wird der den Luftströmungskanal 3 durchströmenden Luft Wärme zugeführt. Dies gilt unabhängig davon, ob die Luft aus dem Raum in die Umgebung des Gebäudes 1 oder aus der Umgebung des Gebäudes 1 in den Raum strömt.

Das Heizelement 17 kann auf prinzipiell beliebige Art ausgebildet sein, sofern es die obenstehend beschriebene Heizfunktion erfüllt. Insbesondere kann das Heizelement 17 als luftströmungsunabhängig erwärmtes Heizelement ausgebildet sein. Der Begriff "luftströmungsunabhängig" bedeutet in diesem Zusammenhang, dass dem Heizelement 17 die zur Erwärmung der Luftströmung erforderliche Energie nicht über einen anderen Luftstrom zugeführt wird. Beispielsweise kann das Heizelement 17 zu diesem Zweck als thermisches Heizelement ausgebildet sein, d. h. als Heizelement, dem über eine entsprechende Wärmeträgerflüssigkeit thermische Energie zugeführt wird und das dadurch erwärmt wird. In der Regel ist das Heizelement 17 entsprechend der symbolischen Darstellung in FIG 4 einer Heizwendel als elektrisches Heizelement ausgebildet. Insbesondere in diesem Fall - also der Ausbildung des Heizelements 17 als elektrisches Heizelement - kann das Heizelement 17 als selbstregulierendes Heizelement ausgebildet sein. Prinzipiell ist eine Selbstregulierung jedoch auch bei einem thermischen Heizelement denkbar.

Es ist möglich, dem Heizelement 17 die zu dessen Betrieb erforderliche elektrische Energie über eine Leitung von extern zuzuführen. Vorzugsweise jedoch weist die Luftströmungsanordnung eine elektrische Energiequelle 18 auf, d. h. eine Einrichtung, die elektrische Energie erzeugt. Im Falle eines thermischen Heizelements kann die erforderliche thermische Energie dem Heizelement 17 beispielsweise über einen kleinen Sonnenkollektor (= ein Solarmodul) zugeführt werden.

Falls der Luftströmungskanal 3 Bestandteil des Fensters 5 ist, ist das Heizelement 17 in der Regel mechanisch fest mit dem Blendrahmen 6 oder dem Flügelrahmen 7 verbunden. Mit dem Blendrahmen 6 kann das Heizelement 17 insbesondere dann mechanisch fest verbunden sein, wenn der Luftströmungskanal 3 im Fensterfalz 12 angeordnet ist (siehe FIG 4, oben) oder im Blendrahmen 6 angeordnet ist oder im Verbreiterungsprofil 6' angeordnet ist. Mit dem Flügelrahmen 7 kann das Heizelement 17 insbesondere dann mechanisch fest verbunden sein, wenn der Luftströmungskanal 3 im Fensterfalz 12 angeordnet ist (siehe FIG 4, unten) oder im Flügelrahmen 7 angeordnet ist oder im Glasfalz angeordnet ist.

Falls die elektrische Energiequelle 18 Bestandteil der Luftströmungsanordnung ist und der Luftströmungskanal 3 Bestandteil des Fensters 5 ist, ist die elektrische Energiequelle 18 vorzugsweise mit demjenigen Rahmen 6, 7 (Blendrahmen 6 oder Flügelrahmen 7) verbunden, mit dem auch das Heizelement 17 verbunden ist. Analoges gilt für den Fall, dass das Heizelement 17 als thermisches Heizelement und hiermit korrespondierend die Energiequelle 18 als thermische Energiequelle ausgebildet ist. Alternativ ist es möglich, eine flexible Leitung zum jeweils anderen Rahmen 7, 6 vorzusehen.

Die elektrische Energiequelle 18 kann nach Bedarf ausgebildet und angeordnet sein. Vorzugsweise ist die elektrische Energiequelle 18 entsprechend der Darstellung in FIG 4 als Fotodiodenanordnung ausgebildet. In diesem Fall kann die Fotodiodenanordnung entsprechend der Darstellung von FIG 4 auf dem Blendrahmen 6 oder dem Flügelrahmen 7 oder auf einem zusätzlichen Profil angeordnet sein. Unter Umständen kann die Fotodiodenanordnung sogar auf einer der Scheiben 11 der Scheibenanordnung 8 angeordnet sein. Falls die Energiequelle 18 als thermische Energiequelle ausgebildet ist, kann sie, wie bereits erwähnt, als kleiner Sonnenkollektor ausgebildet sein. Sie kann nach Bedarf angeordnet sein, insbesondere auf dem Blendrahmen 6, dem Flügelrahmen 7 oder auf einem zusätzlichen Profil. Auch eine Anordnung auf dem Verbreiterungsprofil 6' ist möglich.

Weiterhin ist vorzugsweise zwischen der elektrischen Energiequelle 18 und dem Heizelement 17 eine elektrische Speicheranordnung 19 angeordnet, die der Zwischenpufferung von elektrischer Energie dient. Die elektrische Speicheranordnung 19 kann beispielsweise als kleiner Akkumulator ausgebildet sein. Im Falle einer thermischen Energiequelle muss (selbstverständlich) auch die entsprechende Pufferung thermisch erfolgen. Hierzu bietet sich insbesondere ein Material an, das bei geeigneten Temperaturen (beispielsweise ca. 10 °C bis ca. 40 °C) eine Phasenumwandlung vornimmt. Entsprechende Materialien, die in diesem Temperaturbereich insbesondere schmelzen bzw. erstarren, sind Fachleuten allgemein bekannt.

Die erfindungsgemäße Luftströmungsanordnung arbeitet besonders gut, wenn entsprechend der schematischen Darstellung von FIG 3 im Luftströmungskanal 3 ein Lüftungselement 20 angeordnet ist, mittels dessen die Menge an den Luftströmungskanal 3 durchströmender Luft automatisch und selbsttätig begrenzt wird. Die Einstellung des Lüftungselements 20 wird vorzugsweise von der im Luftströmungskanal 3 strömenden Luft bewirkt. Alternativ kann eine manuelle oder motorische Einstellung erfolgen. Geeignete Lüftungselemente 20 sowie deren Aufbau und Wirkungsweise sind dem Fachmann beispielsweise aus der bereits erwähnten DE 199 29 133 C2 bekannt.

Der weitergehende Aufbau des Fensters 5 ist im Rahmen der vorliegenden Erfindung von untergeordneter Bedeutung. Insbesondere können die Rahmen 6, 7 nach Bedarf aus Holz, aus Kunststoff-Hohlprofilen, aus Aluminium-Hohlprofilen, aus Kombinationen dieser Werkstoffe usw. ausgebildet sein.

Die erfindungsgemäße Luftströmungsanordnung weist signifikante Vorteile auf. Insbesondere ist es mit sehr geringem Aufwand und vernachlässigbarem Energieeinsatz möglich, sowohl Kondensationserscheinungen als auch Zugeffekte zu vermeiden.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

### Bezugszeichenliste

- 1: Gebäude
- 2: Außenhülle/Außenfassade
- 3: Luftströmungskanäle
- 4: Mauerwerk
- 5: Fenster
- 6: Blendrahmen
- 6': Verbreiterungsprofil
- 7: Flügelrahmen
- 8: Scheibenanordnung
- 9: Scharnierbänder
- 10: Griffoliven
- 11: Scheiben
- 12: Fensterfalz
- 13: Außendichtung
- 14, 16: Bereiche
- 15: Innendichtung
- 17: Heizelemente
- 18: Energiequelle
- 19: Speicheranordnung
- 20: passives Lüftungselement

- A: Doppelpfeile

## Patentansprüche

1. Luftströmungsanordnung,
- wobei die Luftströmungsanordnung einen Luftströmungskanal (3) aufweist, der in der Außenfassade (2) eines Gebäudes (1) angeordnet ist und einen Raum des Gebäudes (1) strömungstechnisch mit der Umgebung des Gebäudes (1) verbindet, so dass über den Luftströmungskanal (3) Luft aus dem Raum in die Umgebung und umgekehrt Luft aus der Umgebung in den Raum strömen kann,
- wobei der Luftströmungskanal (3) als passiver Luftströmungskanal (3) ausgebildet ist, so dass sich die Richtung der Luftströmung aufgrund der Luftdruckunterschiede zwischen dem Raum und der Umgebung einstellt,
- wobei im Luftströmungskanal (3) ein Heizelement (17) angeordnet ist und
- wobei der den Luftströmungskanal (3) durchströmenden Luft mittels des Heizelements (17) nicht nur dann, wenn die Luft aus der Umgebung in den Raum strömt, sondern auch dann, wenn die Luft aus dem Raum in die Umgebung strömt, Wärme zugeführt wird.

2. Luftströmungsanordnung nach Anspruch 1,
**dadurch gekennzeichnet,**
**dass** der Luftströmungskanal (3) als Außenluftdurchlass ausgebildet ist.

3. Luftströmungsanordnung nach Anspruch 2,
**dadurch gekennzeichnet,**
**dass** der Außenluftdurchlass (3) im Mauerwerk (4) der Außenfassade (2) angeordnet ist.

4. Luftströmungsanordnung nach Anspruch 1 oder 2,
**dadurch gekennzeichnet,**
**dass** der Luftströmungskanal (3) Bestandteil eines Fensters (5) des Gebäudes (1) ist oder in der Bauanschlussfuge des Fensters (5) mit Mauerwerk (4) der Außenfassade (2) angeordnet ist.

5. Luftströmungsanordnung nach Anspruch 4,
**dadurch gekennzeichnet,**
**dass** der Luftströmungskanal (3) im Blendrahmen (6) des Fensters (5), im Flügelrahmen (7) des Fensters (5), in dem bei geschlossenem Fenster (5) zwischen Blendrahmen (6) und Flügelrahmen (7) ausgebildeten Fensterfalz (12), in einem am Blendrahmen (6) angeordneten Verbreiterungsprofil (6'), im Glas selbst oder im Glasfalz angeordnet ist.

6. Luftströmungsanordnung nach einem der obigen Ansprüche,
**dadurch gekennzeichnet,**
**dass** das Heizelement (17) als luftströmungsunabhängig erwärmtes Heizelement ausgebildet ist.

7. Luftströmungsanordnung nach Anspruch 6,
**dadurch gekennzeichnet,**
**dass** das Heizelement (17) als elektrisches oder als thermisches Heizelement ausgebildet ist.

8. Luftströmungsanordnung nach Anspruch 7,
**dadurch gekennzeichnet,**
**dass** sie eine Energiequelle (18) aufweist, über die das Heizelement (17) mit elektrischer oder thermischer Energie versorgt wird.

9. Luftströmungsanordnung nach Anspruch 8 in Verbindung mit Anspruch 4 oder 5,
**dadurch gekennzeichnet,**
**dass** das Heizelement (17) mit dem Blendrahmen (6) oder dem Flügelrahmen (7) verbunden ist und dass die elektrische oder thermische Energiequelle (18) mit demselben Rahmen (6, 7) verbunden ist.

10. Luftströmungsanordnung nach Anspruch 8 oder 9,
**dadurch gekennzeichnet,**
**dass** die Energiequelle (18) im Falle einer elektrischen Energiequelle als Fotodiodenanordnung und im Falle einer thermischen Energiequelle als Sonnenkollektor ausgebildet ist.

11. Luftströmungsanordnung nach Anspruch 8, 9 oder 10,
**dadurch gekennzeichnet,**
**dass** zwischen der Energiequelle (18) und dem Heizelement (17) eine Speicheranordnung (19) angeordnet ist.

12. Luftströmungsanordnung nach einem der Ansprüche 6 bis 11,
**dadurch gekennzeichnet,**
**dass** das Heizelement (17) als selbstregulierendes Heizelement ausgebildet ist.

13. Luftströmungsanordnung nach einem der obigen Ansprüche,
**dadurch gekennzeichnet,**
**dass** im Luftströmungskanal (3) ein den Volumenstrom begrenzendes Lüftungselement (20) angeordnet ist.
